# EUROPEAN PATENT SPECIFICATION

(11) **EP 3 561 321 B1**
(45) Date of publication and mention of the grant of the patent: **09.09.2020**
(21) Application number: 19168349.9
(22) Date of filing: 10.04.2019
(51) Int. Cl.: F16C 3/10, F16C 7/02, F16C 9/04

(54) **CRANKSHAFT AND INTERNAL-COMBUSTION ENGINE**
KURBELWELLE UND VERBRENNUNGSMOTOR
VILEBREQUIN ET MOTEUR À COMBUSTION INTERNE

(30) Priority: 24.04.2018 JP 2018083114
(43) Date of publication of application: 30.10.2019
(73) Proprietor: YAMAHA HATSUDOKI KABUSHIKI KAISHA, Iwata-shi, Shizuoka 438-8501 (JP)
(72) Inventor: OGA, Hirotsugu, Iwata-shi, Shizuoka 438-8501 (JP); FUKUSHIGE, Takahiro, Iwata-shi, Shizuoka 438-8501 (JP); OTA, Toshiya, Iwata-shi, Shizuoka 438-8501 (JP); TAKAMI, Koichi, Iwata-shi, Shizuoka 438-8501 (JP)
(74) Representative: Grünecker Patent- und Rechtsanwälte PartG mbB

(56) References cited:
- WO-A1-2005/100626
- JP-A- S58 160 618
- US-A- 3 144 702

## Description

The present invention relates to a crankshaft comprising a first part formed by forming a first crank web, a crank pin that extends from the first crank web, and a second part including a second crank web in which a hole in which the crank pin is inserted is formed. The crank pin includes a first pin portion located inside the hole of the second crank web and a second pin portion located outside the hole of the second crank web and located closer to the first crank web than the first pin portion, and at least a portion of the first pin portion and the second pin portion include a first hardening layer, and an internal-combustion engine including the crankshaft. Such crankshaft can be taken from the prior art document JP S58-160618 A.

Conventionally, a crankshaft including a first part that includes a first crank web, a second part that includes a second crank web, and a crank pin that is connected to the first crank web and the second crank web has been known. The crankshaft is configured by assembling the first part, the crank pin, and the second part that are separate parts.

As a crankshaft which has higher rigidity than that of the above described crankshaft, a crankshaft (which will be hereinafter referred to as an integral crankshaft) in which a first crank web, a crank pin, and a second crank web are integrally formed has been known. For example, JP 4393204 describes such an integral crankshaft.

A large end portion of a connecting rod is connected to a crank pin of a crankshaft. The crank pin rotatably supports the large end portion of the connecting rod. Therefore, the crank pin is required to have high wear-resistance and strength. In JP 4393204, it is described that, in order to increase wear-resistance and strength of the crank pin, induction hardening is performed on the crank pin.

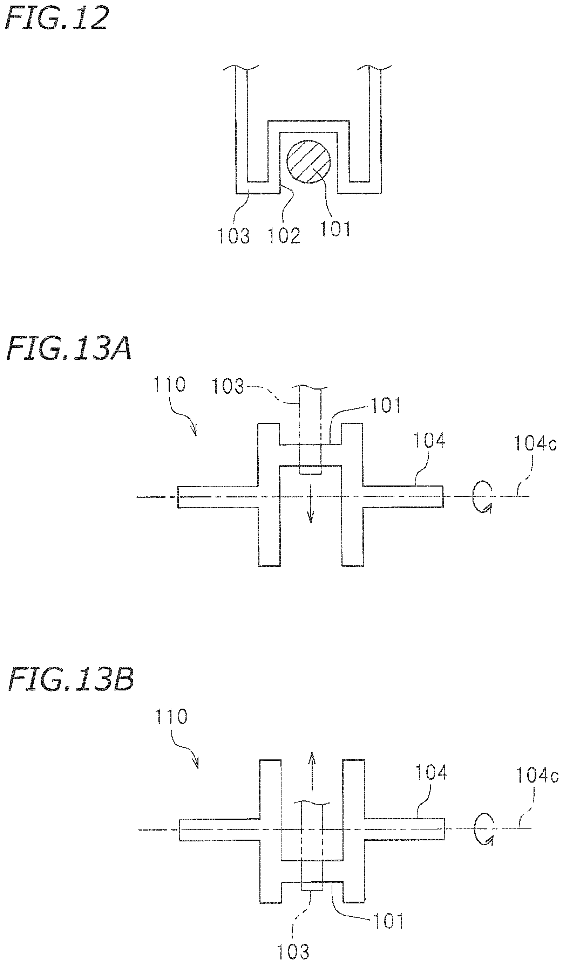

When induction hardening is performed on the crank pin, as illustrated in FIG. 12, a coil 103 including a recessed portion 102 that surrounds a portion of a circumference of a crank pin 101 is prepared. Then, as illustrated in FIG. 13A, a crankshaft 110 is caused to rotate around a central line 104c of a crank journal 104 while a high frequency current is caused to flow in the coil 103. Thus, induction hardening can be performed on an entire circumference of the crank pin 101.

Incidentally, the crank pin 101 is eccentric to the crank journal 104. When the crankshaft 110 is caused to rotate around the central line 104c of the crank journal 104, as illustrated in FIG. 13A and FIG. 13B, the crank pin 101 moves in an up-down direction. Therefore, it is necessary to move the coil 103 in accordance with movement of the crank pin 101 in the up-down direction.

As described above, to perform induction hardening on the crank pin 101 in manufacturing the above described crankshaft 110, a special device that causes the coil 103 to move in the up-down direction is needed. The above described crankshaft 110 has high rigidity but much effort and cost are required for induction hardening of the crank pin 101.

It is an object of the present invention to provide a crankshaft which has relatively high rigidity and in which induction hardening can be easily performed on a crank pin at low cost and an internal-combustion engine including the crankshaft. According to the present invention said object is solved by crankshaft having the features of independent claim 1. Preferred embodiments are laid down in the dependent claims.

A crankshaft disclosed herein includes a first part formed by integrally forming a first crank web and a crank pin that extends from the first crank web and a second part including a second crank web in which a hole in which the crank pin is inserted is formed. The crank pin includes a first pin portion located inside the hole of the second crank web and a second pin portion located outside the hole of the second crank web and located closer to the first crank web than the first pin portion. At least a portion of the first pin portion and the second pin portion include a first induction hardening layer.

In the crankshaft, the first crank web and the crank pin are formed as an integrated piece, and therefore, as compared to a crankshaft in which a first crank web and a crank pin are separate pieces, rigidity is high. Also, with the crankshaft, for example, if a coil that surrounds a portion of a circumference of the crank pin is prepared and the first part is caused to rotate around an axis of the crank pin, induction hardening can be performed on the crank pin without causing the coil to move in a radial direction of the crank pin. Alternatively, if a coil that surrounds an entire circumference of the crank pin is prepared, induction hardening can be performed on the crank pin without causing the coil to move in the radial direction of the crank pin and also without causing the first part to rotate. Therefore, induction hardening can be easily performed on the crank pin at low cost.

The first induction hardening layer may be included in an entire outer peripheral surface of the first pin portion and an entire outer peripheral surface of the second pin portion.

According to one preferred embodiment, a peripheral portion of the crank pin in the first crank web includes a second induction hardening layer.

The peripheral portion of the crank pin in the first crank web serves as a portion that receives a radial load and a thrust load from a large end portion of a connecting rod that is connected to the crank pin. According to the above described preferred embodiment, the peripheral portion includes the induction hardening layer, and therefore, wear-resistance and strength of the crankshaft can be effectively increased.

According to one preferred embodiment, the crank pin includes an outer peripheral surface and a tip surface that is perpendicular to the outer peripheral surface, and an induction hardening layer is not included in the tip surface.

The tip surface of the crank pin is not required to have as high wear-resistance and strength as those of the outer peripheral surface of the crank pin. According to the above described preferred embodiment, induction hardening of a portion that is not required to have wear-resistance and strength is omitted, and thereby, effort and cost of manufacturing the crankshaft can be reduced.

The first part may include a first shaft that extends from the first crank web toward an opposite side to the crank pin. The first shaft may be integrally formed with the first crank web and the crank pin.

According to one preferred embodiment, when it is assumed that a portion of the first shaft, an outer diameter of which is smallest, a radius thereof is r, an induction hardening layer is not included in a range of the radius r from an axis of the first shaft in a plane of the first crank web, which faces the second crank web.

According to the above described preferred embodiment, induction hardening of a portion that is not required to have wear-resistance and strength is omitted, and thereby, effort and cost of induction hardening can be reduced.

According to one preferred embodiment, when viewed from a direction perpendicular to a plane including the axis of the first shaft and an axis of the crank pin, a step portion that projects toward the first crank web is formed in a position that is at a distance from the crank pin and is close to the axis of the first shaft in the plane of the second crank web, which faces the first crank web.

The second crank web and the crank pin are separate pieces, and therefore, in polishing the outer peripheral surface of the crank pin (specifically, the outer peripheral surface of a portion of the crank pin, which is located close to the second crank web), the step portion of the second crank web is not an obstacle. Therefore, the step portion can be provided in the second crank web. With the step portion, necessary imbalance for the second crank web can be ensured even without increasing a width of the second crank web. Accordingly, a size of the crankshaft can be reduced.

An internal-combustion engine disclosed herein includes the crankshaft, a connecting rod connected to the crank pin of the crankshaft and a sliding bearing arranged between the crank pin and the connecting rod.

In a case in which the bearing arranged between the crank pin and the connecting rod is a rolling bearing, rolling fatigue strength is required for the crank pin, and therefore, carburizing and hardening is necessary. On the other hand, in a case in which the bearing is a sliding bearing, it is sufficient to ensure surface hardness of the crank pin. Therefore, it is possible to sufficiently satisfy required functions by performing induction hardening, not carburizing and hardening, as hardening of the crank pin. With the internal-combustion engine, induction hardening that is less expensive than carburizing and hardening can be used, a sliding bearing that is less expensive than a rolling bearing can be used, and therefore, it is possible to reduce costs.

According to one preferred embodiment, a hole in which the crank pin is inserted is formed in the connecting rod, and at least a peripheral portion of the hole of the connecting rod is formed of a single part.

According to the above described preferred embodiment, as compared to a case in which a connecting rod in which a peripheral portion of a hole in which a crank pin is inserted is formed of a plurality of portions, an advantageous effect of reduction in cost or the like can be achieved.

The internal-combustion engine may include a single cylinder. That is, the internal-combustion engine may be a single-cylinder internal-combustion engine.

### EFFECTS OF THE INVENTION

According to the present teaching, a crankshaft which has relatively high rigidity and in which induction hardening can be easily performed on a crank pin at low cost and an internal-combustion engine including the crankshaft can be provided.

### BRIEF DESCRIPTION OF THE DRAWINGS

FIG.1 is a side view of a motorcycle.
FIG. 2 is a partial cross-sectional view of a power unit.
FIG. 3 is a front view of a connecting rod.
FIG. 4 is an exploded perspective view of a crankshaft according to one preferred embodiment.
FIG. 5 is a side view of a crankshaft according to one preferred embodiment.
FIG. 6 is a cross-sectional view of a first part.
FIG. 7 is a conceptual view of a coil used in a first method of induction hardening.
FIG. 8A is an explanatory view illustrating the first method.
FIG. 8B is another explanatory view illustrating the first method.
FIG. 9 is a conceptual view of a coil used in a second method of induction hardening.
FIG. 10 is an explanatory view illustrating the second method.
FIG. 11A is a view illustrating how polishing processing is performed on a crank pin of an integral crankshaft.
FIG. 11B is a view illustrating how polishing processing is performed on a crank pin of a crankshaft according to one preferred embodiment.
FIG. 12 is a conceptual view of a coil used for induction hardening on a crank pin of an integral crankshaft.
FIG. 13A is an explanatory view illustrating a known method for performing induction hardening on a crank pin of an integral crank shaft.
FIG. 13B is another explanatory view illustrating the known method.

### DETAILED DESCRIPTION OF THE PREFERRED EMBODIMENTS

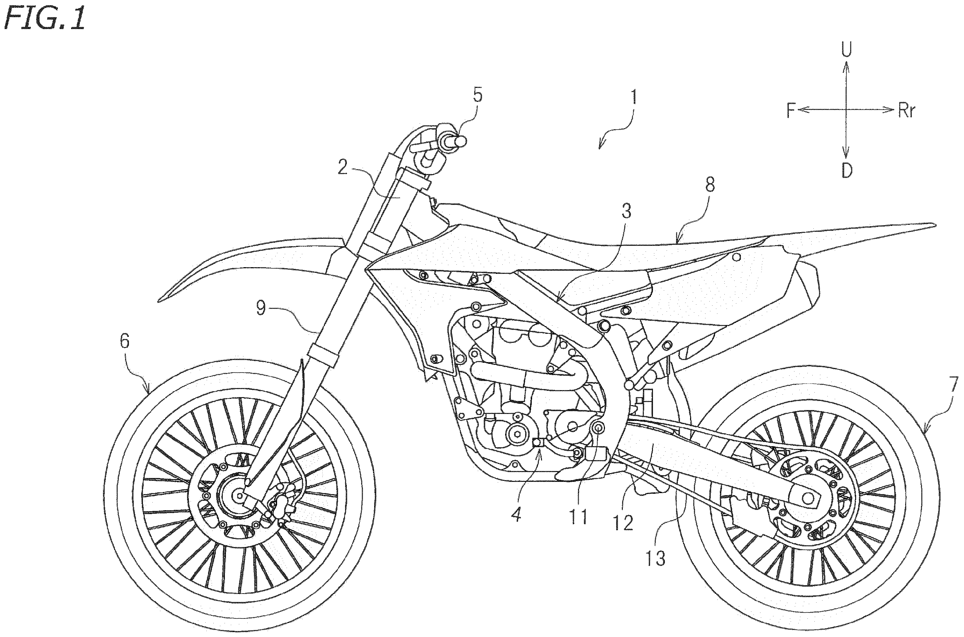

With reference to the attached drawings, preferred embodiments of the present teaching will be described below. FIG. 1 is a side view of a motorcycle 1 that is an example of a straddled vehicle.

In the following description, for convenience sake, front, rear, left, right, up, and down mean front, rear, left, right, up, and down, when viewed from a virtual rider who sits on a seat 8 of the motorcycle 1 in a state in which the rider is not on the motorcycle 1, a fuel is not filled, and no load is on the motorcycle 1, respectively. Reference signs F, Rr, L, R, U, and D denote front, rear, left, right, up, and down in the drawings, respectively.

The motorcycle 1 includes a body frame 3 including a head pipe 2, a power unit 4 supported by the body frame 3, a seat 8 supported by the body frame 3, a front wheel 6, and a rear wheel 7. A steering shaft (not illustrated) is inserted in the head pipe 2 so as to be rotatable in a left-right direction. A handle 5 is fixed to an upper part of the steering shaft. A front fork 9 is fixed to a lower part of the steering shaft. The front wheel 6 is rotatably supported by a lower end portion of the front fork 9. A front end portion of a rear arm 12 is swingably supported by the body frame 3 via a pivot shaft 11. The rear wheel 7 is rotatably supported by a rear end portion of the rear arm 12. The power unit 4 and the rear wheel 7 are connected to one another by a chain 13.

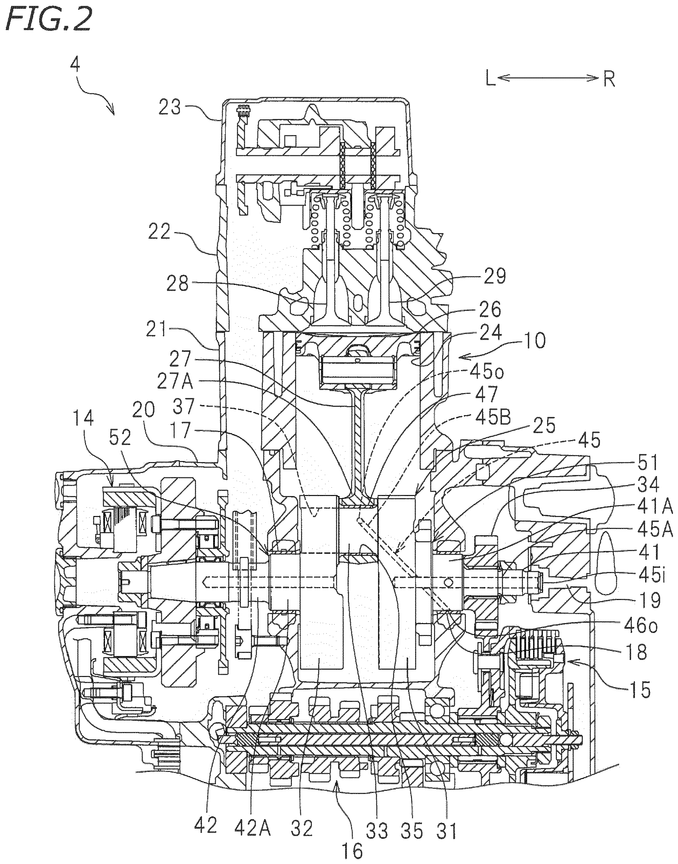

FIG. 2 is a cross-sectional view of the power unit 4. The power unit 4 includes a single-cylinder internal-combustion engine 10. Also, the power unit 4 includes a generator 14, a clutch 15, and a transmission 16.

The internal-combustion engine 10 includes a crank case 20, a cylinder body 21 that is connected to the crank case 20, a cylinder head 22 that is connected to the cylinder body 21, and a cylinder head cover 23 that is connected to the cylinder head 22. The cylinder body 21 includes a single cylinder 24. The internal-combustion engine 10 includes only one cylinder 24.

The internal-combustion engine 10 includes a crankshaft 25 that is rotatably supported by the crank case 20 via bearings 17, 18, a piston 26 housed in the cylinder 24, and a connecting rod 27 that connects the crankshaft 25 and the piston 26. The internal-combustion engine 10 is a four-cycle engine. The cylinder head 22 is provided with an intake valve 28, an exhaust valve 29, and an ignition device that is not illustrated.

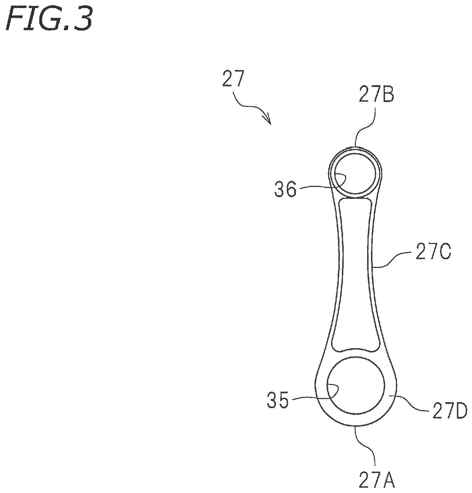

As illustrated in FIG. 3, the connecting rod 27 includes a large end portion 27A in which a hole 35 is formed, a small end portion 27B in which a hole 36 is formed, and a connecting portion 27C that connects the large end portion 27A and the small end portion 27B. In the connecting rod 27 according to this embodiment, the large end portion 27A, the connecting portion 27C, and the small end portion 27B are integrally formed. That is, the connecting rod 27 is a single part which is integrally formed. A peripheral portion 27D that surrounds the entire circumference of the hole 35 of the large end portion 27A is integrally formed. There is no joint in the peripheral portion 27D of the hole 35 of the large end portion 27A.

As illustrated in FIG. 2, the crankshaft 25 includes a first crank web 31, a second crank web 32, a crank pin 33, a first shaft 41, and a second shaft 42. The first shaft 41 extends rightward from the first crank web 31. The crank pin 33 extends leftward from the first crank web 31. The first shaft 41 is arranged in an opposite side to the crank pin 33 with respect to the first crank web 31. The second shaft 42 extends leftward from the second crank web 32.

The first shaft 41 is connected to the clutch 15 via a gear 34. The clutch 15 is connected to the transmission 16. In this case, the first shaft 41 and the transmission 16 are indirectly connected to one another. The transmission 16 is a stage transmission including a plurality of gears and is configured such that a transmission gear ratio can be changed by changing a combination of gears that mesh with one another. However, there is no particular limitation on a configuration of the transmission 16. The generator 14 is connected to the second shaft 42. In this case, the generator 14 is directly connected to the second shaft 42.

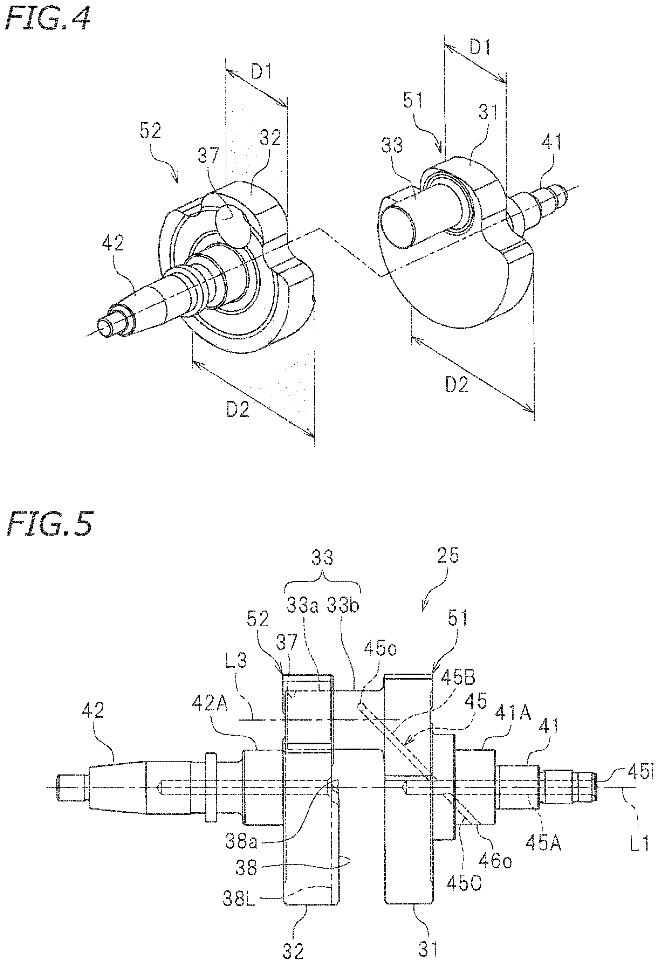

As illustrated in FIG. 4, the crankshaft 25 includes a first part 51 and a second part 52. Each of the first part 51 and the second part 52 is a single part which is integrally formed. The first part 51 includes a first shaft 41, a first crank web 31, and a crank pin 33. The first shaft 41, the first crank web 31, and the crank pin 33 are integrally formed. The second part 52 includes a second shaft 42 and a second crank web 32. The second shaft 42 and the second crank web 32 are integrally formed.

A pin hole 37 in which the crank pin 33 is pressed is formed in the second crank web 32. Such a pin hole in which the crank pin 33 is pressed is not formed in the first crank web 31. The crank pin 33 of the first part 51 is pressed in the pin hole 37 of the second part 52, and thereby, the first part 51 and the second part 52 are assembled.

FIG. 5 is a side view of the crankshaft 25. Specifically, FIG. 5 is a view of the crankshaft 25 from a direction perpendicular to a plane including an axis L3 of the crank pin 33 and an axis L1 of the first shaft 41. The crank pin 33 includes a first pin portion 33a located inside the pin hole 37 of the second crank web 32 and a second pin portion 33b located outside the pin hole 37. The second pin portion 33b is located closer to the first crank web 31 than the first pin portion 33a.

As illustrate in FIG. 5, a step portion 38a that projects toward the first crank web 31 is formed in a plane of the second crank web 32, which faces the first crank web 31. A portion which is located in an opposite side to the crank pin 33 with respect to the step portion 38a is a projecting portion 38 that projects toward the first crank web 31. The step portion 38a is formed on a boundary of the projecting portion 38. Note that a virtual line 38L in FIG. 5 is a line that indicates the plane of the second crank web 32, which faces the first crank web 31, in a case in which it is assumed that the projecting portion 38 is not formed. A portion located in the right of the virtual line 38L in FIG. 5 is the above described projecting portion 38. On the other hand, a projecting portion that projects toward the second crank web 32 is not formed in a plane of the first crank web 31, which faces the second crank web 32.

As illustrated in FIG. 2, a metal bearing 47 is arranged inside the hole 35 of the large end portion 27A of the connecting rod 27. The metal bearing 47 is an example of a sliding bearing and is formed of a metal cylinder. The metal bearing 47 exists between the large end portion 27A of the connecting rod 27 and the crank pin 33.

As illustrated in FIG. 5, the first shaft 41 includes a first journal portion 41A. The second shaft 42 includes a second journal portion 42A. As illustrated in FIG. 2, the first journal portion 41A is rotatably supported by the crank case 20 via the bearing 18. The second journal portion 42A is rotatably supported by the crank case 20 via the bearing 17. There is no particular limitation on types of the bearing 17 and the bearing 18 but, in this case, each of the bearing 17 and the bearing 18 is formed of a sliding bearing, such as a metal bearing or the like. However, each of the bearing 17 and the bearing 18 may be a rolling bearing, such as a ball bearing or the like.

As illustrated in FIG. 5, an oil passage 45 is formed in the first part 51. The oil passage 45 includes an inlet port 45i that is formed in a tip surface of the first shaft 41, an outlet port 45o that is formed in an outer peripheral surface of the crank pin 33, and another outlet port 46o that is formed in an outer peripheral surface of the first shaft 41.

The oil passage 45 includes a central passage 45A, an inclined passage 45B, and an inclined passage 45C. The central passage 45A extends from the inlet port 45i along the axis L1 of the first shaft 41. At least a portion of the central passage 45A is formed inside the first shaft 41. The inclined passage 45B and the inclined passage 45C are inclined with respect to the axis L1 of the first shaft 41. The inclined passage 45B connects the central passage 45A and the outlet port 45o. The inclined passage 45C connects the central passage 45A and the outlet port 46o. The inclined passage 45B passes inside the first crank web 31 and inside the crank pin 33.

As illustrated in FIG. 2, the inlet port 45i of the oil passage 45 is opened toward an oil passage 19 that is formed in the crank case 20. The inlet port 45i is formed so as to introduce a lubricant to the oil passage 45 of the crankshaft 25 from the oil passage 19 that is formed in the crank case 20. The outlet port 45o is opened toward the metal bearing 47. The outlet port 45o is formed so as to supply the lubricant to the metal bearing 47 from the oil passage 45. The outlet port 46o is opened toward the bearing 18. The outlet port 46o is formed so as to supply the lubricant to the bearing 18 from the oil passage 45.

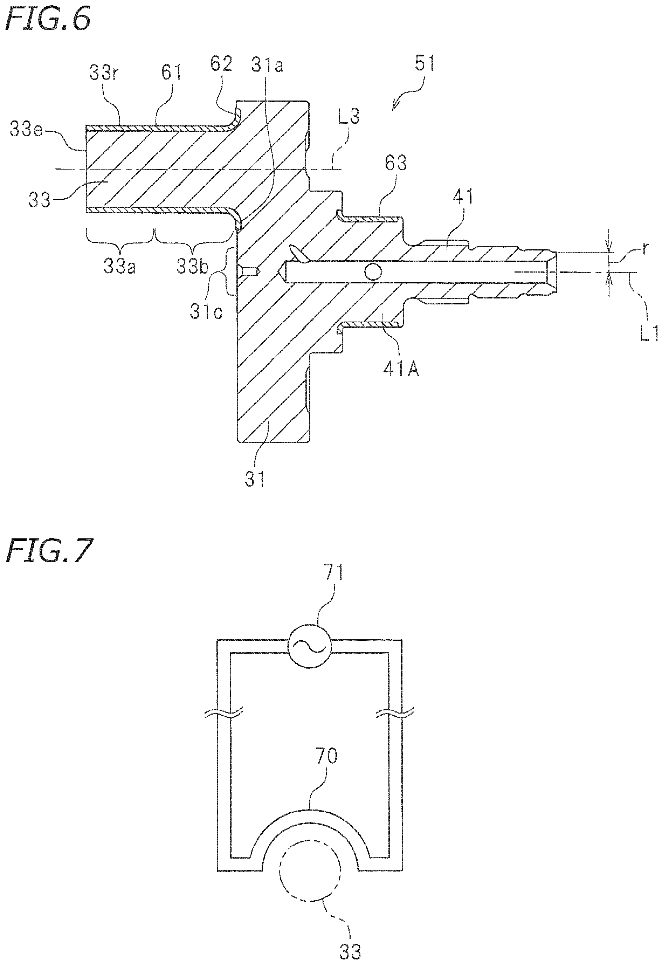

FIG. 6 is a cross-sectional view of the first part 51. Induction hardening has been performed on a portion of the first part 51. Specifically, an (first) induction hardening layer 61 is included in an outer peripheral surface 33r of the crank pin 33. As described above, the crank pin 33 includes the first pin portion 33a and the second pin portion 33b. The induction hardening layer 61 is included in the entire outer peripheral surface 33r of the first pin portion 33a and the second pin portion 33b. On the other hand, the crank pin 33 includes a tip surface 33e that is perpendicular to the outer peripheral surface 33r, but an induction hardening layer has not been formed in the tip surface 33e. Induction hardening is not performed on the tip surface 33e. However, in some cases, as a result of induction hardening that has been performed on the outer peripheral surface 33r of the crank pin 33, an induction hardening layer is included in an edge portion of the tip surface 33e. For the phrase used herein "an induction hardening layer is not formed in the tip surface 33e", the induction hardening layer included in the edge portion of the tip surface 33e as a result of induction hardening performed on the outer peripheral surface 33r is not taken into consideration.

Also, a peripheral portion 31a of the crank pin 33 in the first crank web 31 includes an (second) induction hardening layer 62. The peripheral portion 31a includes a portion (an R portion) which curves to extend from a surface of the crank pin 33 to a surface of the first crank web 31. The peripheral portion 31a includes a plane that is inclined with respect to an axis L3 of the crank pin 33 and a plane that is perpendicular to the axis L3. The first induction hardening layer 62 is continuous to the second induction hardening layer 61.

On the other hand, there is no induction hardening layer in a portion of the first crank web 31 which is in a vicinity of an axis L1 of the first shaft 41. In this case, when it is assumed that a portion of the first shaft 41, an outer diameter of which is smallest, a radius of said portion is r, an induction hardening layer is not included in a portion 31c in a range of said radius r from the axis L1 in the plane of the first crank web 31, which faces the second crank web 32 as illustrated in FIG. 6.

The first journal portion 41A and a peripheral portion of the first journal portion 41A include an (third) induction hardening layer 63. The induction hardening layer 63 is included in the entire first journal portion 41A. Although not illustrated in the drawings, an induction hardening layer is included also in the second journal portion 42A of the second part 52 and a peripheral portion of the second journal portion 42A. However, the induction hardening layer 63 may not be provided in the first journal portion 41A and the peripheral portion of the first journal portion 41A. Also, the induction hardening layer may not be provided in the second journal portion 42A of the second part 52 and the peripheral portion of the second journal portion 42A.

Next, as examples of a method for forming the induction hardening layer 61, 62 in the crank pin 33, two methods will be described.

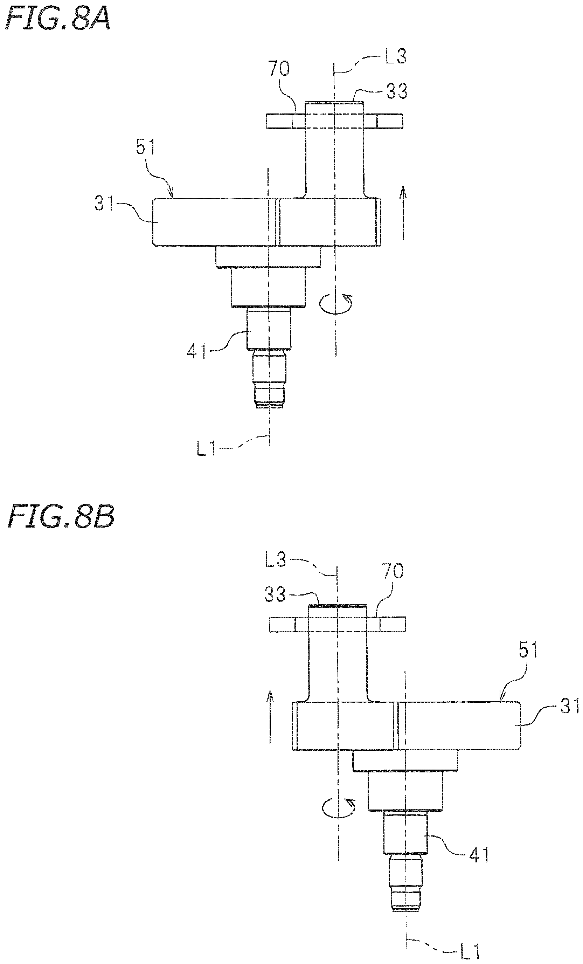

In a first method, first, as illustrated in FIG. 7, a semi-annular coil 70 connected to a high-frequency power source 71 is prepared. Next, the first part 51 is fixed to a jig that is not illustrated and, as illustrated in FIG. 8A, the jig is caused to rotate with the axis L3 of the crank pin 33 as a center. Thus, the first part 51 rotates around the axis L3. Then, the coil 70 is arranged along the crank pin 33 and the jig is caused to move along the axis L3 while a high-frequency current is caused to flow in the coil 70. Thus, the first part 51 moves along the axis L3 and the crank pin 33 moves in a direction of the axis L3 with respect to the coil 70. As illustrated in FIG. 7, the coil 70 has a semi-annular shape but because, as illustrated in FIG. 8A and FIG. 8B, the first part 51 rotates around the axis L3 of the crank pin 33, the entire outer peripheral surface of the crank pin 33 can be evenly heated even without causing the coil 70 to move in a radial direction of the crank pin 33.

Note that, in the first method, a shape of the coil 70 is not limited to a semi-annular shape. Because the first part 51 rotates around the axis L3 of the crank pin 33, if the coil 70 includes a portion that faces at least a portion of the outer peripheral surface of the crank pin 33, it is possible to heat the entire outer peripheral surface of the crank pin 33.

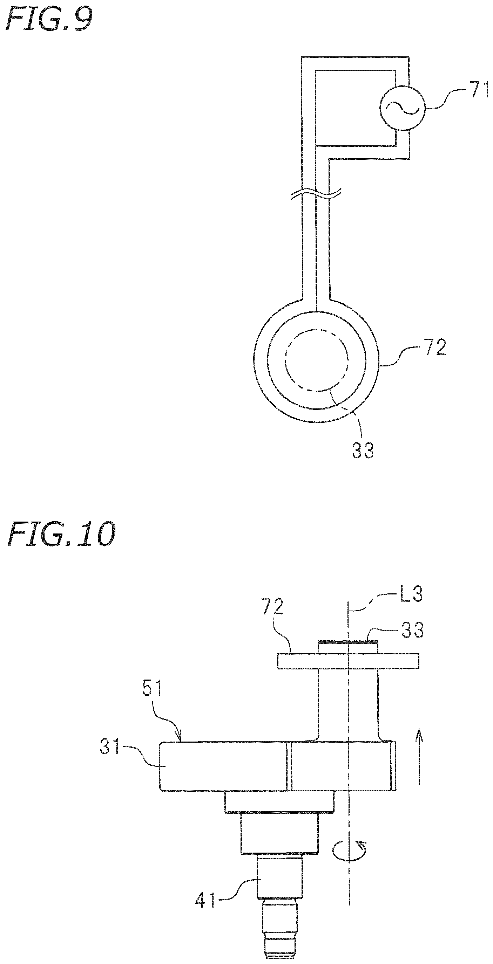

Next, a second method will be described. In the second method, first, as illustrated in FIG. 9, an annular coil 72 connected to the high-frequency power source 71 is prepared. Next, the first part 51 is fixed to a jig that is not illustrated. Then, the crank pin 33 is arranged inside the annular coil 72 and the jig is caused to move along the axis L3 of the crank pin 33 while a high-frequency current is caused to flow in the coil 72. Thus, as illustrated in FIG. 10, the first part 51 moves along the axis L3 and the crank pin 33 moves in a direction of the axis L3 with respect to the coil 72. In the second method, the coil 72 surrounds an entire circumference of the crank pin 33, and therefore, even without causing the first part 51 to rotate, the entire outer peripheral surface of the crank pin 33 can be evenly heated.

In the first and second methods, the coil 70, 72 is fixed and the first part 51 is caused to move along the axis L3 of the crank pin 33. However, the coil 70, 72 may be caused to move along the axis L3 of the crank pin 33. The coil 70, 72 and the crank pin 33 may be relatively movable along the axis L3.

Note that, when the induction hardening layer 63 is formed in the first journal portion 41A, a similar method to the first method and the second method that have been described above may be used. However, when a similar method to the first method is used, the first part 51 is caused to rotate with the axis L1 of the first shaft 41 as a center. Thus, an entire outer peripheral surface of the first journal portion 41A can be evenly heated only by causing the first part 51 to move along the axis L1 of the first shaft 41. On the other hand, when a similar method to the second method is used, even without causing the first part 51 to rotate around the axis L1, the entire outer peripheral surface of the first journal portion 41A can be evenly heated.

As has been described above, the crankshaft 25 of the internal-combustion engine 10 according to this embodiment includes the first part 51 formed by integrally forming the first shaft 41, the first crank web 31, and the crank pin 33 and the second part 52 formed by integrally forming the second shaft 42 and the second crank web 32. The first crank web 31 and the crank pin 33 are formed as an integrated piece, and therefore, the crankshaft 25 according to this embodiment has high rigidity, as compared to a crankshaft in which the first crank web 31 and the crank pin 33 are separate pieces.

On the other hand, in the crankshaft 25 according to this embodiment, the crank pin 33 and the second crank web 32 are separate pieces. Only the first part 51 including the crank pin 33 can be fixed to the jig and induction hardening can be performed on the crank pin 33. In accordance with the first method, induction hardening can be performed on the outer peripheral surface 33r of the crank pin 33 only by causing the jig to rotate around the axis L3 of the crank pin 33 and to move along the axis L3. Also, in accordance with the second method, induction hardening can be performed on the outer peripheral surface 33r of the crank pin 33 only by causing the jig to move along the axis L3. In each of the above described methods, unlike the known technology that has been descried with reference to FIG. 13A and FIG. 13B, it is not necessary to cause the coil 70, 72 to move in the radial direction of the crank pin 33. Accordingly, induction hardening can be easily performed on the crank pin 33 at low cost.

Therefore, according to this embodiment, the crankshaft 25 which has relatively high rigidity and in which induction hardening can be easily performed on the crank pin 33 at low cost can be achieved.

Incidentally, as a method for performing hardening on a crankshaft, carburizing and quenching is known. In carburizing and hardening, a crankshaft is put in a furnace and hardening is performed on the entire crankshaft. A hardening layer having high hardness is formed on an entire surface of the crankshaft due to effects of carburization. When carburizing and hardening is performed on the crankshaft in which the crank pin 33 and both of the crank webs 31, 32 are integrally formed, a hardening layer having high hardness is not formed inside the second crank web 32. On the other hand, according to this embodiment, the crankshaft 25 is assembled by pressing the crank pin 33 on which induction hardening has been performed in the pin hole 37 of the second crank web 32. The induction hardening layer 61 is included in the entire outer peripheral surface 33r of the first pin portion 33a and the second pin portion 33b of the crank pin 33. Therefore, the induction hardening layer 61 (specifically the induction hardening layer 61 of the first pin portion 33a) exists inside the second crank web 32. The crankshaft 25 according to this embodiment is different from a known crankshaft including an induction hardening layer only on a surface of a crank web in a point that the crankshaft 25 includes the induction hardening layer 61 inside the second crank web 32.

Also, according to this embodiment, induction hardening has been performed not only on the outer peripheral surface 33r of the crank pin 33 but also the peripheral portion 31a of the crank pin 33 in the first crank web 31. The peripheral portion 31a of the crank pin 33 in the first crank web 31 includes the induction hardening layer 62. The peripheral portion 31a of the crank pin 33 of the first crank web 31 serves as a portion that receives a radial load and a thrust load from the large end portion 27A of the connecting rod 27 connected to the crank pin 33. According to this embodiment, the induction hardening layer 62 is included in the peripheral portion 31a, and thereby, wear-resistance and strength of the crankshaft 25 can be effectively increased.

Also, according to this embodiment, the induction hardening layer 61 is included in the outer peripheral surface 33r of the crank pin 33, but an induction hardening layer is not included in the tip surface 33e. The tip surface 33e of the crank pin 33 is not required to have as high wear-resistance and strength as those of the outer peripheral surface 33r. According to this embodiment, induction hardening of a portion that is not required to have wear-resistance and strength is omitted, and thereby, effort and cost of manufacturing the crankshaft 25 can be reduced.

As illustrated in FIG. 6, according to this embodiment, an induction hardening layer is not included in a portion other than the peripheral portion 31a of the crank pin 33 in the plane of the first crank web 31, which faces the second crank web 32. An induction hardening layer is not formed in the portion 31c of the first crank web 31 which is in a vicinity of the axis L1. As has been described above, induction hardening of a portion that is not required to have high wear-resistance and strength can be omitted, and thereby, effort and cost of induction hardening can be reduced.

Each of the crank webs 31, 32 is configured such that, in order to reduce an inertia force that is generated by movement of the piston 26 and the connecting rod 27, weight balance is uneven. That is, a portion of each of the crank webs 31, 32 which is far from the crank pin 33 is configured to have a larger weight than that of a portion thereof which is located closer to the crank pin 33. In order to ensure imbalance of the weight of each of the crank webs 31, 32, as illustrated in FIG. 4, a width D2 of the portion of each of the crank webs 31, 32 which is far from the crank pin 33 is larger than a width D1 of the portion of each of the crank webs 31, 32 which is closer to the crank pin 33. Furthermore, according to this embodiment, as illustrated in FIG. 5, the step portion 38a that projects toward the first crank web 31 is formed in a position that is at a distance from the crank pin 33 and is close to the axis L1 of the first shaft 41 in the plane of the second crank web 32, which faces the first crank web 31. The projecting portion 38 that projects toward the first crank web 31 is provided under the step portion 38a in FIG. 5. Therefore, according to this embodiment, necessary imbalance can be ensured while the width D2 is reduced. Accordingly, a size of the crankshaft 25 can be reduced and, furthermore, a size of the internal-combustion engine 10 can be reduced.

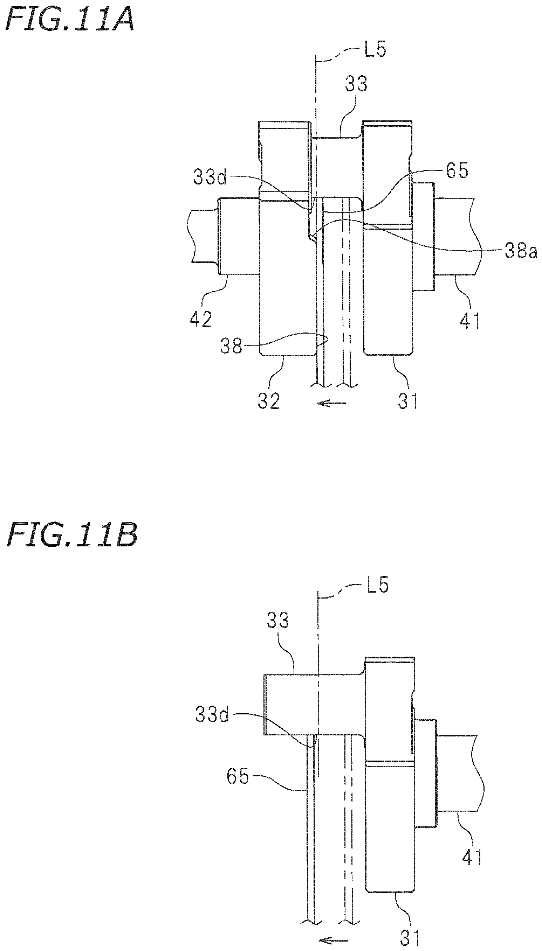

Incidentally, roundness is required for the crank pin 33, and therefore, polishing processing is performed on the crank pin 33. As illustrated in FIG. 11A, if, when the crank pin 33 and both of the crank webs 31, 32 are integrally formed as one piece, the step portion 38a is formed in the second crank web 32, a tool 65 that is used for polishing processing cannot be moved to a side that is closer to the second crank web 32 than the step portion 38a. That is, in FIG. 11A, the tool 65 cannot be moved to a left side of a straight line L5. Therefore, the tool 65 cannot be applied to a portion 33d of the crank pin 33 which is in a vicinity of the second crank web 32, and therefore, the crank pin 33 cannot be well polished.

On the other hand, according to this embodiment, as illustrated in FIG. 11B, the crank pin 33 is a separate piece from the second crank web 32, and therefore, the tool 65 can be moved to the left side of the straight line L5 without being interrupted by the step portion 38a of the second crank web 32. The tool 65 can be applied also to the portion 33d of the crank pin 33 which is in a vicinity of the second crank web 32 and the crank pin 33 can be well polished. Note that the step portion 38a is not formed in the first crank web 31. Therefore, the tool 65 can be well applied also to a portion of the crank pin 33 which is in a vicinity of the first crank web 31. Therefore, according to this embodiment, the crank pin 33 can be well polished and also the size of the crankshaft 25 can be reduced by providing the step portion 38a.

With the internal-combustion engine 10 according to this embodiment, the bearing arranged between the crank pin 33 and the large end portion 27A of the connecting rod 27 is the metal bearing 47 that is a type of a sliding bearing. In a case in which the bearing arranged between the crank pin 33 and the large end portion 27A of the connecting rod 27 is a rolling bearing, such as a needle bearing or the like, rolling fatigue strength is required for the crank pin 33, and therefore, carburizing and hardening is necessary. On the other hand, in a case in which the bearing is a sliding bearing, it is sufficient to ensure surface hardness of the crank pin 33. Therefore, it is possible to sufficiently satisfy required functions by performing induction hardening, not carburizing and hardening, as hardening of the crank pin 33. According to this embodiment, induction hardening that is less expensive than carburizing and hardening can be used, a sliding bearing that is less expensive than a rolling bearing can be used, and therefore, it is possible to reduce costs.

Also, with the internal-combustion engine 10 according to this embodiment, the peripheral portion 27D of the hole 35 of the large end portion 27A of the connecting rod 27 is an integrated piece (see FIG. 3). The peripheral portion 27D of the hole 35 of the large end portion 27A is not formed of a plurality of parts but is formed of a single part. In a connecting rod in which the large end portion 27A is formed of a plurality of parts, bolts used for assembling the parts are needed and costs and weight are increased. In this embodiment, however, the large end portion 27A is formed of a single part, the bolts are not needed, and also, a size of the large end portion 27A can be reduced. Therefore, reduction in cost and weight is possible. Also, a turning trail of the large end portion 27A associated with rotation of the crankshaft 25 is small, and therefore, a size of the internal-combustion engine 10 can be reduced. In a case in which the large end portion 27A is formed of a plurality of parts, in order to ensure the roundness of the hole 35, it is necessary to assemble the parts together at high accuracy. According to this embodiment, however, it is not necessary to assemble a plurality of parts, and therefore, roundness of the hole 35 of the large end portion 27A can be relatively easily ensured. Furthermore, there are only a few parts in the large end portion 27A on which stress concentrates, and therefore, it is easy to ensure strength.

One preferred embodiment of the present teaching has been described above but, as a matter of course, the present teaching is not limited to the above described preferred embodiment. Next, other preferred embodiments will be simply described.

In the above described preferred embodiment, the internal-combustion engine 10 may be formed so as to be bilateral symmetry. The first part 51 may be arranged in a left side of the second part 52.

In the above described preferred embodiment, induction hardening is performed on the entire outer peripheral surface 33r of the crank pin 33. Not only for the second pin portion 33b but also for the first pin portion 33a, induction hardening is performed on the entire outer peripheral surface 33r. However, a portion of the crank pin 33 which contacts the metal bearing 47 is the second pin portion 33b. It is not necessary to perform induction hardening on the entire outer peripheral surface 33r of the first pin portion 33a. A portion or a whole of the outer peripheral surface 33r of the first pin portion 33a may not include the induction hardening layer 61.

In the above described preferred embodiment, induction hardening has not been performed on the tip surface 33e of the crank pin 33 but, as a matter of course, it is possible to perform induction hardening on the tip surface 33e. The tip surface 33e may include an induction hardening layer. Also, it is also possible to provide an induction hardening layer in some other portion of the first part 51.

In the above described preferred embodiment, the step portion 38a is formed in the second crank web 32, but the step portion 38a is not necessarily needed. It is possible to omit the step portion 38a.

The internal-combustion engine 10 is not limited to a four-cycle engine and may be a two-cycle engine. The number of cylinders of the internal-combustion engine 10 is not limited to one but may be two or more.

In the above described preferred embodiment, a straddled vehicle is the motorcycle 1. However, a straddled vehicle is a vehicle on which a rider rises straddling thereon and is not limited to the motorcycle 1. A straddled vehicle may be a motor tricycle, an all-terrain vehicle (ATV), or the like.

### Reference Signs List

1...Motorcycle, 10...Internal-combustion engine, 25...Crankshaft, 27...Connecting rod, 27A...Large end portion, 27D...Peripheral portion, 31...First crank web, 32... Second crank web, 33... Crank pin, 33a...First pin portion, 33b...Second pin portion, 33e...Tip surface of crank pin, 33r...Outer peripheral surface of crank pin, 35...Hole, 37... Pin hole, 38a...Step portion, 41...First shaft, 42... Second shaft, 47...Metal bearing (sliding bearing), 51...First part, 52...Second part, 61 to 63...Induction hardening layer, L1...Axis of first shaft, L3...Axis of crank pin

## Claims

1. A crankshaft (25) comprising:
a first part (51) formed by forming a first crank web (31);
a crank pin (33) that extends from the first crank web (31); and
a second part (52) including a second crank web (32) in which a hole (37) in which the crank pin (33) is inserted is formed,
wherein the crank pin (33) includes a first pin portion (33a) located inside the hole (37) of the second crank web (32) and a second pin portion (33b) located outside the hole (37) of the second crank web (32) and located closer to the first crank web (31) than the first pin portion (33a), and
at least a portion of the first pin portion (33a) and of the second pin portion (33b) includes a first hardening layer (61), **characterized in that**
the first part (51) is formed by integrally forming the first crank web (31) and the crank pin (33) that extends from the first crank web (31), wherein
at least said portion of the first pin portion (33a) and the second pin portion (33b) includes said first hardening layer as a first induction hardening layer (61).

2. The crankshaft (25) according to claim 1, **characterized in that** the induction hardening layer (61) is included in an entire outer peripheral surface (33r) of the first pin portion (33a) and an entire outer peripheral surface (33r) of the second pin portion (33b).

3. The crankshaft (25) according to claim 1 or 2, **characterized in that** a peripheral portion (31a) of the crank pin (33) in the first crank web (31) includes a second induction hardening layer (62).

4. The crankshaft (25) according to claim 3, **characterized in that** the first induction hardening layer (61) is continuous with the second induction hardening layer (62).

5. The crankshaft (25) according to any one of claims 1 to 4, **characterized in that** the crank pin (33) includes an outer peripheral surface (33r) and a tip surface (33e) that is perpendicular to the outer peripheral surface (33r), and
a second induction hardening layer is not included in the tip surface (33e).

6. The crankshaft (25) according to any one of claims 1 to 5, **characterized in that** the first part (51) includes a first shaft (41) that extends from the first crank web (31) toward an opposite side to the crank pin (33), and
the first shaft (41) is integrally formed with the first crank web (31) and the crank pin (33).

7. The crankshaft (25) according to claim 6, **characterized in that,** when it is assumed that a portion of the first shaft (41), an outer diameter of which is smallest, a radius thereof is r, an induction hardening layer is not included in a range of the radius r from an axis (L1) of the first shaft (41) in a plane of the first crank web (31), which faces the second crank web (32).

8. The crankshaft (25) according to claim 6 or 7, **characterized in that,** when viewed from a direction perpendicular to a plane including the axis (L1) of the first shaft (41) and an axis (L3) of the crank pin (33), a step portion (38a) that projects toward the first crank web (31) is formed in a position that is at a distance from the crank pin (33) and is close to the axis (L1) of the first shaft (41) in the plane of the second crank web (32), which faces the first crank web (31).

9. An internal-combustion engine (10) comprising:
the crankshaft (25) according to any one of claims 1 to 8;
a connecting rod (27) connected to the crank pin (33) of the crankshaft (25); and
a sliding bearing (47) arranged between the crank pin (33) and the connecting rod (27).

10. The internal-combustion engine (10) according to claim 9, wherein a hole (35) in which the crank pin (33) is inserted is formed in the connecting rod (27), and
at least a peripheral portion (27D) of the hole (35) of the connecting rod (27) is formed of a single part.

11. The internal-combustion engine (10) according to claim 9 or 10, comprising:
a single cylinder (24).

## Patentansprüche

1. Eine Kurbel-Welle (25), die umfasst:
einen ersten Teil (51), der durch Bildung einer ersten Kurbel-Wange (31) ausgebildet ist;
einen Kurbel-Zapfen (33), der sich von der ersten Kurbel-Wange (31) erstreckt; und
einen zweiten Teil (52), der eine zweite Kurbel-Wange (32), in der ein Loch (37) ausgebildet ist, in das der Kurbel-Zapfen (33) eingesetzt ist, beinhaltet,
wobei der Kurbel-Zapfen (33) einen ersten Zapfen-Abschnitt (33a), der innerhalb des Lochs (37) der zweiten Kurbel-Wange (32) angeordnet ist, und einen zweiten Zapfen-Abschnitt (33b), der außerhalb des Lochs (37) der zweiten Kurbel-Wange (32) angeordnet ist, und näher an der ersten Kurbel-Wange (31) als der erste Zapfen-Abschnitt (33a) angeordnet ist, beinhaltet, und
zumindest ein Abschnitt des ersten Stift-Abschnitts (33a) und des zweiten Stift-Abschnitts (33b) eine erste Härtungs-Schicht (61) beinhaltet, **dadurch gekennzeichnet, dass**
dar erste Teil (51) durch integrales Ausbilden der ersten Kurbel-Wange (31) und des Kurbel-Zapfens (33), der sich von der ersten Kurbel-Wange (31) erstreckt, gebildet ist, wobei
zumindest der Teil des ersten Stift-Abschnitts (33a) und des zweiten Stift-Abschnitts (33b) die erste Härtungs-Schicht als eine erste Induktions-Härtungs-Schicht (61) beinhaltet.

2. Die Kurbel-Welle (25) nach Anspruch 1, **dadurch gekennzeichnet, dass** die Induktions-Härtungs-Schicht (61) in einer gesamten äußeren Umfangsfläche (33r) des ersten Stift-Abschnitts (33a) und einer gesamten äußeren Umfangsfläche (33r) des zweiten Stift-Abschnitts (33b) enthalten ist.

3. Die Kurbel-Welle (25) nach Anspruch 1 oder 2, **dadurch gekennzeichnet, dass** ein Umfangs-Abschnitt (31a) des Kurbel-Zapfens (33) in der ersten Kurbel-Wange (31) eine zweite Induktions-Härtungs-Schicht (62) aufweist.

4. Die Kurbel-Welle (25) nach Anspruch 3, **dadurch gekennzeichnet, dass** die erste Induktions-Härtungs-Schicht (61) durchgehend mit der zweiten Induktions-Härtungs-Schicht (62) ist.

5. Die Kurbel-Welle (25) nach einem der Ansprüche 1 bis 4, **dadurch gekennzeichnet, dass** der Kurbel-Zapfen (33) eine äußere Umfangsfläche (33r) und eine Spitzenfläche (33e) aufweist, die senkrecht zur äußeren Umfangsfläche (33r) steht, und
eine zweite Induktions-Härtungs-Schicht in der Spitzenfläche (33e) nicht enthalten ist.

6. Die Kurbel-Welle (25) nach einem der Ansprüche 1 bis 5, **dadurch gekennzeichnet, dass** der erste Teil (51) eine erste Welle (41) aufweist, die sich von der ersten Kurbel-Wange (31) zu einer dem Kurbel-Zapfen (33) gegenüberliegenden Seite erstreckt, und
die erste Welle (41) einstückig mit der ersten Kurbel-Wange (31) und dem Kurbel-Zapfen (33) ausgebildet ist.

7. Die Kurbel-Welle (25) nach Anspruch 6, **dadurch gekennzeichnet, dass,** wenn angenommen wird, dass ein Abschnitt der ersten Welle (41), dessen AußenDurchmesser am kleinsten ist, ein Radius desselben ist r, eine Induktions-Härtungs-Schicht in einem Bereich des Radius r von einer Achse (L1) der ersten Welle (41) in einer Ebene der ersten Kurbel-Wange (31), die der zweiten Kurbel-Wange (32) gegenüberliegt, nicht enthalten ist.

8. Die Kurbel-Welle (25) nach Anspruch 6 oder 7, **dadurch gekennzeichnet, dass** bei Betrachtung aus einer Richtung senkrecht zu einer Ebene, welche die Achse (L1) der ersten Welle (41) und eine Achse (L3) des Kurbel-Zapfens (33) enthält, ein Stufen-Abschnitt (38a), der in Richtung der ersten Kurbel-Wange (31) vorsteht, in einer Position ausgebildet ist, die von dem Kurbel-Zapfen (33) beabstandet ist, und nahe der Achse (L1) der ersten Welle (41) in der Ebene der zweiten Kurbel-Wange (32) ist, die der ersten Kurbel-Wange (31) zugewandt ist.

9. Einen Motor mit innerer Verbrennung (10), der umfasst:
die Kurbel-Welle (25) nach einem der Ansprüche 1 bis 8;
eine Verbindungs-Stange (27), die mit dem Kurbel-Zapfen (33) der Kurbel-Welle (25) verbunden ist; und
ein Gleit-Lager (47), das zwischen dem Kurbel-Zapfen (33) und der Verbindungs-Stange (27) angeordnet ist.

10. Der Motor mit innerer Verbrennung (10) nach Anspruch 9, wobei ein Loch (35), in das der Kurbel-Zapfen (33) eingesetzt ist, in der Verbindungs-Stange (27), und zumindest ein Umfangs-Abschnitt (27D) des Lochs (35) der Verbindungs-Stange (27) aus einem einzigen Teil ausgebildet sind.

11. Der Motor mit innerer Verbrennung (10) nach Anspruch 9 oder 10, der umfasst:
einen einzelnen Zylinder (24).

## Revendications

1. Vilebrequin (25) comprenant :
une première pièce (51) formée en façonnant un premier bras de manivelle (31),
un maneton de vilebrequin (33) qui se déploie à partir du premier bras de manivelle (31), et
une seconde pièce (52) incluant un second bras de manivelle (32), dans lequel est formé un alésage (37), où est inséré le maneton de vilebrequin (33),
dans lequel le maneton de vilebrequin (33) inclut une première partie de maneton (33a) située à l'intérieur de l'alésage (37) du second bras de manivelle (32) ainsi qu'une seconde partie de maneton (33b) située à l'extérieur de l'alésage (37) du second bras de manivelle (32) et située pour être plus proche du premier bras de manivelle (31) que de la première partie de maneton (33a), et
au moins une partie de la première partie de maneton (33a) et de la seconde partie de maneton (33b) inclut une première couche de durcissement (61), **caractérisé en ce que** :
la première pièce (51) est formée par façonnage en une seule pièce du premier bras de manivelle (31) et du maneton de vilebrequin (33) qui s'étend à partir du premier bras de manivelle (31), où
au moins ladite partie de la première partie de maneton (33a) et de la seconde partie de maneton (33b) inclut ladite première couche de durcissement sous forme d'une première couche de durcissement par induction (61).

2. Vilebrequin (25) selon la revendication 1, **caractérisé en ce que** la couche de durcissement par induction (61) est incluse dans la totalité de la surface périphérique externe (33r) de la première partie de maneton (33a) et dans la totalité de la surface périphérique externe (33r) de la seconde partie de maneton (33b).

3. Vilebrequin (25) selon la revendication 1 ou la revendication 2, **caractérisé en ce qu'une** partie périphérique (31a) du maneton de vilebrequin (33) dans le premier bras de manivelle (31) inclut une seconde couche de durcissement par induction (62).

4. Vilebrequin (25) selon la revendication 3, **caractérisé en ce que** la première couche de durcissement par induction (61) est continue avec la seconde couche de durcissement par induction (62).

5. Vilebrequin (25) selon l'une quelconque des revendications 1 à 4, **caractérisé en ce que** le vilebrequin (33) inclut une surface périphérique externe (33r) et une surface d'extrémité (33e) qui est perpendiculaire à la surface périphérique externe (33r), et
aucune seconde couche de durcissement par induction n'est incluse dans la surface d'extrémité (33e).

6. Vilebrequin (25) selon l'une quelconque des revendications 1 à 5, **caractérisé en ce que** la première pièce (51) inclut un premier arbre (41) qui s'étend depuis le premier bras de manivelle (31) vers le côté opposé au maneton de vilebrequin (33), et
le premier arbre (41) est formé en une seule pièce avec le premier bras de manivelle (31) et le maneton de vilebrequin (33).

7. Vilebrequin (25) selon la revendication 6, **caractérisé en ce que,** lorsque l'on suppose que le rayon d'une partie du premier arbre (41), dont le diamètre externe est le plus petit, vaut r, aucune couche de durcissement par induction n'est incluse dans la plage du rayon r depuis l'axe (L1) du premier arbre (41) dans le plan du premier bras de manivelle (31) qui fait face au second bras de manivelle (32) .

8. Vilebrequin (25) selon la revendication 6 ou la revendication 7, **caractérisé en ce que,** lorsqu'on la regarde depuis une direction perpendiculaire à un plan incluant l'axe (L1) du premier arbre (41) et l'axe (L3) du maneton de vilebrequin (33), une partie en échelon (38) qui dépasse vers le premier bras de manivelle (31) est formée à une position qui se trouve à une certaine distance du maneton de vilebrequin (33) et qui est proche de l'axe (L1) du premier arbre (41) dans le plan du second bras de manivelle (32) qui fait face au premier bras de manivelle (31).

9. Moteur à combustion interne (10) comprenant :
le vilebrequin (25) conforme à l'une quelconque des revendications 1 à 8,
une barre de raccordement (27) reliée au maneton de vilebrequin (33) du vilebrequin (25), et
un palier coulissant (47) disposé entre le maneton de vilebrequin (33) et la barre de raccordement (27)

10. Moteur à combustion interne (10) selon la revendication 9, dans lequel un alésage (35), dans lequel est inséré le maneton de vilebrequin (33), est formé dans la barre de raccordement (27), et
au moins une partie périphérique (27D) de l'alésage (35) de la barre de raccordement (27) est formée d'une seule pièce.

11. Moteur à combustion interne (10) selon la revendication 9 ou la revendication 10, comprenant :
un cylindre unique (24).
